Europäisches Patentamt

European Patent Office

Office européen des brevets

(11) Publication number: **0 215 952**
**B1**

# EUROPEAN PATENT SPECIFICATION

(45) Date of publication of patent specification: **02.01.91**

(51) Int. Cl.⁵: **G 06 F 15/60**

(21) Application number: **86901497.7**

(22) Date of filing: **20.02.86**

(86) International application number:
**PCT/JP86/00080**

(87) International publication number:
**WO 86/05296 12.09.86 Gazette 86/20**

(54) **APPARATUS FOR COMPUTING QUANTITIES EXPRESSED BY DRAWINGS.**

(30) Priority: **28.02.85 JP 39379/85**

(43) Date of publication of application:
**01.04.87 Bulletin 87/14**

(45) Publication of the grant of the patent:
**02.01.91 Bulletin 91/01**

(84) Designated Contracting States:
**DE FR GB**

(56) References cited:
**WO-A-82/04339**
**GB-A-2 116 407**
**JP-A-59 045 575**

**COMPUTERS IN MATERIALS TECHNOLOGY,**
**Proceedings of the International Conference**
**held at the Institute of Technology, Linköping**
**University, June 4-5, 1980, SE, H.**
**FISCHMEISTER: "Digital image analysis in**
**quantitative metallography"**

(73) Proprietor: **SHIMIZU CONSTRUCTION Co. LTD.**
**16-1, Kyobashi 2-chome**
**Chuo-ku Tokyo 104 (JP)**

(72) Inventor: **KOBAYASHI, Kimihiro Shimizu**
**Construction Co.,Ltd.**
**16-1, Kyobashi 2-chome Chuo-ku**
**Tokyo 104 (JP)**
Inventor: **HASHIMOTO, Yuji Shimizu**
**Construction Co., Ltd.**
**16-1, Kyobashi 2-chome Chuo-ku**
**Tokyo 104 (JP)**
Inventor: **YOSHIDA, Takanori Shimizu**
**Construction Co., Ltd.**
**16-1, Kyobashi 2-chome Chuo-ku**
**Tokyo 104 (JP)**

(74) Representative: **Dixon, Donald Cossar et al**
**Gee & Co. Chancery House Chancery Lane**
**London WC2A 1QU (GB)**

Courier Press, Leamington Spa, England.

## Description

Technical Field

This invention relates to a drawing measurement processing unit for measuring length, area, volume and the like from construction and other drawings designated by using coordinate input means such as a digitizer.

Background Art

Work such as preparing a job estimate or materials estimate performed at a construction firm involves finding length, area and volume from drawings. Such an operation can be performed at the time measurements are made and is not necessarily performed at the construction site. Conventionally, the usual practice is to use a set (triangular) square and planimeter for an operation of this type. In order to reduce labor, systems have appeared in which software for large-scale or personal computers utilizing a digitizer has been developed, wherein numerical information is entered from a keyboard and subsequent computations are performed mechanically (i.e., through electronic calculations).

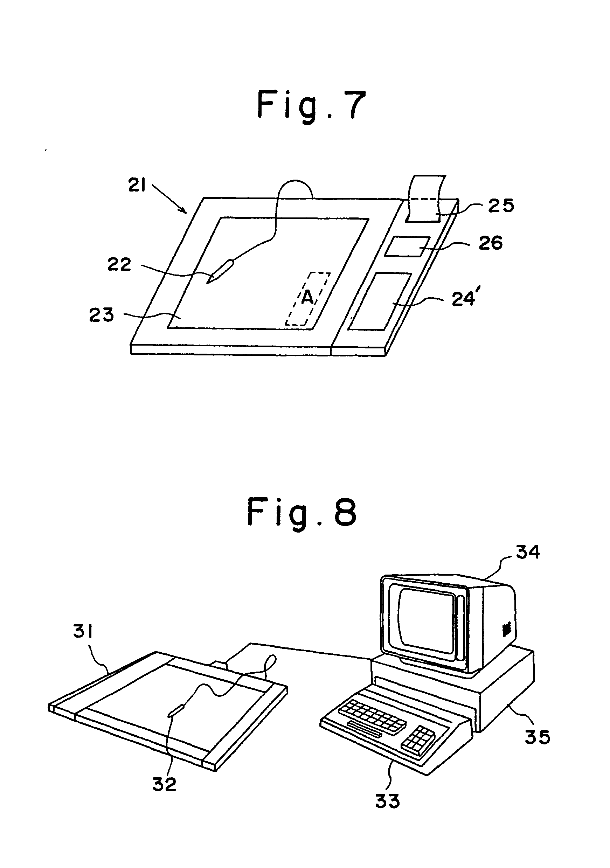

Fig. 8 is a view illustrating an example of a conventional measurement processing unit utilizing a digitizer. Numeral 31 denotes a digitizer, 32 a stylus pen, 33 a keyboard, 34 a display, and 35 a central processing unit (CPU).

In the measurement processing unit shown in Fig. 8 the digitizer 31 having the stylus pen 32 is connected to a personal computer comprising the keyboard 33, display 34 and central processing unit 35. Data and commands inputted from the keyboard 33 and coordinate values inputted from the digitizer 31 are processed by the central processing unit 35 to obtain lengths and areas. The results are outputted to and displayed by the display 34.

As shown in Fig. 8, this recently developed measurement processing unit has the personal computer connected to the digitizer. This is disadvantageous in that the unit is not constructed as a general-purpose, easily usable device, the unit is large in size and not easy to carry, and the cost of the unit is high. Consequently, set squares and planimeters, which are inexpensive and long-established measuring means, are still widely used. These can only measure length, area and the like individually and cannot perform applied calculations. In other words, the state of the art is such that the operation for finding length, area and volume is still largely performed by hand and therefore involves many difficulties in terms of efficiency and accuracy.

The present invention is based on the foregoing considerations and its object is to provide a unit capable of obtaining length, area, volume and the like from a drawing placed on a panel.

'Computers in Materials Technology', Proceedings of the International Conference held at the Institute of Technology, Linköping University, Sweden, June 4—5, 1980 discloses at pages 111—159 a similar system whereby a digitizing panel is used to input graphic data into a computer for quantitative metallography. In this case, however, an image is created on the panel by means of, for example, a scanning microscope or a macroviewer and image features are treated with a pen or cursor.

GB—A—2 116 407 discloses an electronically synthesised video palette whereby selected colors for an image can be mixed to obtain a desired shade, which may then be stored for use in a subsequent painting. The palette system may be incorporated into a known graphics arrangement having a touch tablet, a computer, a framestore and a display. A palette area is present on the touch tablet and occupies about 1/16th of the touch tablet and mixing is achieved with the stylus of the touch tablet.

The present invention is based on the foregoing considerations and its object is to provide a unit capable of obtaining length, area, volume and the like from a drawing placed on a panel of the unit.

Another object of the present invention is to provide a unit capable of simplifying key information input and programs.

Still another object of the present invention is to provide a unit which is simple and easy to operate.

A further object of the present invention is to provide a unit which is compact and easy to carry.

In order to attain the foregoing objects, the present invention provides a measurement processing unit which includes means for inputting a computation command and coordinate values, processing means for computing length, area and volume and the like from the inputted computation command and coordinate values, and output means for outputting the inputted data and the contents of computations, characterised in that the imput means, the processing means and the output means are all mounted upon a single board, the unit is useable for processing the measurements of a drawing placed on the panel, and it includes a menu sheet affixed to a specified coordinate region in the panel of the input means and having keys for designating desired computations and scales.

Thus, by imputting a predetermined computation command from the imput means of this processing unit and then imputting the coordinate values that are to be submitted to the computation, a desired length, area, volume and the like can be found from a drawing. Since only the keys necessary for length, area and volume computation commands need to be provided, the input means can be simplified because the types of keys are few in number.

This also enables the processing means to be implemented by a simple program. Accordingly, the unit can be handled substantially in the same manner as a calculator, and actual lengths, areas, volumes and the like can be obtained from a drawing written in any scale through a simple operation which does not require complicated manipulations. Moreover, by arranging the unit with the minimum required number of keys and the minimum required program, the unit can be integrated, reduced in size and weight and made readily portable. In addition, the unit is flexible and can be adapted to various objectives by changing a menu sheet and program.

Brief Description of the Drawings

Fig. 1 is a view illustrating an embodiment of a drawing measurement processing unit according to the present invention;

Fig. 2 is a block diagram illustrating the system configuration of the drawing measurement processing unit of the present invention;

Fig. 3 is a view illustrating an example of a menu sheet.

Fig. 4 is a view for describing a specific example of input processing;

Fig. 5 is a view illustrating another example of a menu sheet;

Fig. 6 is a view illustrating another embodiment of a drawing measurement processing unit according to the present invention;

Fig. 7 is a view illustrating a further embodiment of a drawing measurement processing unit according to the present invention; and

Fig. 8 is a view illustrating an example of a conventional measurement processing unit utilizing a digitizer.

Best Mode for Carrying Out the Invention

A mode for carrying out the present invention will now be described with reference to the drawings.

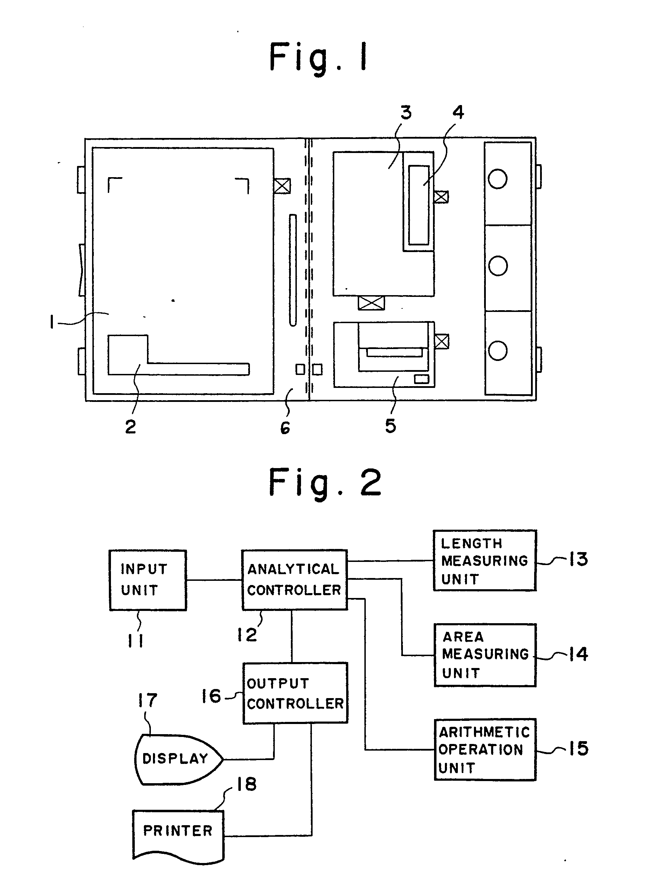

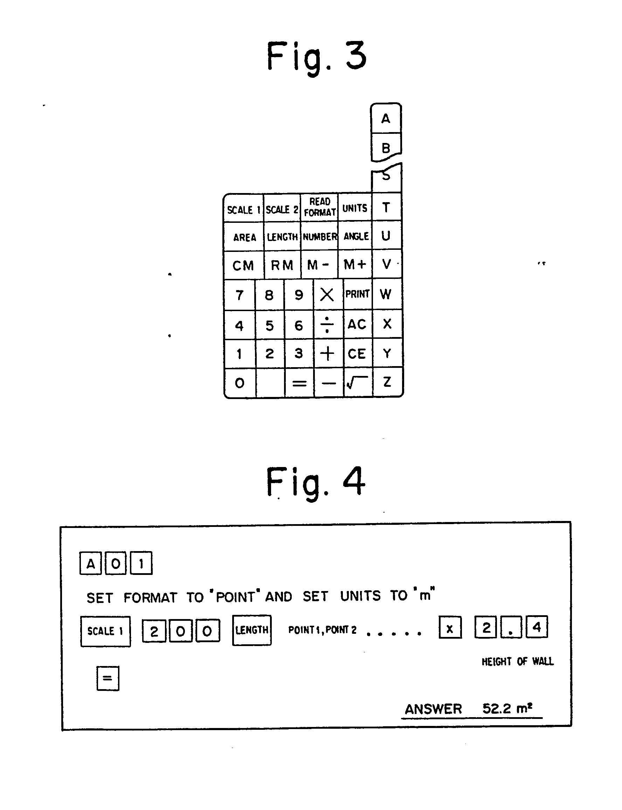

In Fig. 1, numeral 1 denotes coordinate input means, 2 a menu sheet, 3 processing means, 4 display means and 5 printing output means. The coordinate input means is a so-called digitizer or tablet for inputting numerical values on a panel by using a stylus pen or cursor. The menu sheet 2 is affixed to a specified coordinate region on the panel of the input means 1. Though the menu sheet 2 will be described in detail later with reference to Fig. 3, the menu sheet or key pad has by way of example, numeric keys of from "0" to "9", computation designating keys such as "x", "÷", "AREA" and "LENGTH", and scale designating keys such as "SCALE 1" and "SCALE 2". The processing means 3 functions to read in the coordinate values from the coordinate value input means 1, determine whether a coordinate value lies in a specific coordinate region (the region of menu sheet 2), identify key information corresponding to the coordinate value and execute processing defined by the key information if the coordinate value is within the region of the menu sheet 2, and accept and identify the coordinate value directly as data if the coordinate value lies ·outside the region of the menu sheet 2. Accordingly, by hitting the menu sheet 2 with a stylus pen, the processing means 3 recognizes the key information on the menu sheet 2 from the coordinate values. For instance, if a scale key is hit with the stylus pen to set a scale, a computation designating key is hit to designate computation of an area and desired points on a drawing placed on the panel are hit in succession, then the processing means 3 will compute the area from the coordinate values of the desired range. The display means 4 displays the input information recognized by the processing means 3, as well as the results of the computations. The printing output means 5 prints out this information in accordance with a print instruction.

The coordinate value region recognition program, a program for identifying the key information and executing processing corresponding to each item of key information, and other programs in the processing means 3 are prepared depending upon the contents of the menu sheet 2. By way of example, these programs can be stored in a memory such as a replaceable ROM with which the processing means 3 can be replaceably provided to conform to a change in the menu sheet 2 affixed to the panel. Alternatively, a program can be modified by using the processing means 3 having a keyboard, whereby the keys can be used to alter the program in accordance with a change in the menu sheet affixed to the panel.

Fig. 2 shows a functional block diagram of the drawing measurment processing unit illustrated in Fig. 1. In Fig. 2, the portion comprising an analytical controller 12, a length measuring unit 13, an area, measuring unit 14, an arithmetic operations unit 15 and an output controller 16 corresponds to the processing means 3 shown in Fig. 1. The analytical controller 12 has an internal memory, reads in coordinate values from the input unit (coordinate input means) 11, determines whether a coordinate value lies within a specific coordinate region (the region of the menu sheet 2), and executes analytical processing of the key input information from the menu sheet 2. Units and scale are defined based on the results of the analysis. The analytical controller 12 starts the length measuring unit 13 if a computation for measurement of length is designated, the area measuring unit 14 if computation for measurement of area is designated, and the arithmetic operations unit 15 if an arithmetic computation is designated. The output controller 16 controls outputs to a display 17 and a printer output unit 18 in accordance with a command from the analytical controller 12.

Fig. 3 illustrates a specific example of the menu sheet. In Fig. 3, "SCALE 1" is a scale designating key used when scale is decided in advance so as to define a scale of 1/1000 by inputting 1000 using the numeric keys. The "SCALE 2" key is used when defining scale by coordinate values inputted from the coordinate input section and numerical values inputted from the numeric keys, as by inputting coordinates between two points of a length (e.g. a length of 1000) on the drawing and inputting the length as 1000 using the numeric keys when the scale is unclear. Depending on the drawing, the vertical and horizontal scales are not the same. When such is the case, a "SCALE 3" can be added in such a manner that definition according to the "SCALE 2" method is carried out for each of the vertical and horizontal directions. With the system shown in Fig. 2, this processing is performed by the analytical controller 12.

When coordinate values are inputted along points for obtaining length by a "LENGTH" computation designating key, the analytical controller 12 obtains coordinate values converted in accordance with the scale definition, and the length measuring unit 13 computes the distance between these coordinate values. When the area of, say, the wall of a room is to be found with the "AREA" key, coordinate values are inputted along the wall on a plan view and the height of the wall is inputted by the numeric keys. The analytical controller 12 then obtains coordinate values converted in accordance with the scale definition and the area measuring unit 14 computes the distance (the total length of the wall) between the coordinate values, then multiplies this by the height of the wall inputted from the numeric keys in order to calculate the area. In addition, when coordinate values are inputted along a region for obtaining area and a height by which this area is to be multiplied is inputted from the numeric keys, the analytical controller 12 obtains coordinate values converted in accordance with the scale definition and the area measuring unit 14 computes the area surrounded by these coordinate values and then multiplies this by height to calculate volume. Further, it is possible to adopt an arrangement in which, by using other computation designation keys, these results are stored in the memory of the analytical controller 12 so that arithmetic operations ("M+", "M−", "RM") can be performed with the next step of computation results. For example, in a case where areas are computed for regions at several locations and the total of these areas is to be obtained, processing used in a calculator is performed, as by using the "M+" key to store the area found each time and add this to the next area. In addition, in a case where portions having the same length or area, such as entrances, exits and pillars in a construction drawing, are to be subjected to calculations, an arrangement may be adopted in which a "NUMBER" key is provided, the number of coordinate inputs is counted by this computation designation, and this is multiplied by coordinate values (length or area) provided by the numeric keys.

"READ FORMAT" represents a key used to set an input method. Whenever an input is made using this key, a changeover is effected between a POINT (discrete) designation and a STREAM (successive) designation. POINT (discrete) is for making point inputs one point at a time when obtaining area or length, while STREAM (successive) is for making inputs successively (by moving the stylus pen while it is being pressed down) when finding area or length on a drawing which includes curves. "UNITS" is a key for designating measurement units. Whenever an input is made using this key, the set units are changed in accordance with a predetermined sequence, such as km → m → cm. "PRINT" is a key operated when printing numbers and the results of measurement.

A specific example of input processing will now be described. Assume that the plan view of a building is placed on the panel to obtain the area of a wall, and that the height of the wall is 2.4 m. In such case, the first step is to input a data identification code (ID) "A01", followed by inputting the "READ FORMAT" to establish the "POINT" mode, "UNITS" to set "m", and then "SCALE 1", "200" and "LENGTH", as shown in Fig. 4. When this has been accomplished, the analytical controller 12 analyzes these inputs and then, in accordance with point inputs based on the starting and end points of straight lines, recognizes that the lengths between these points are to be obtained in accordance with the scale, with m being the unit. Accordingly, when a plurality of points (coordinate values) are thereafter inputted in succession along the wall of the building in the plan view, these coordinate values are delivered to the length measuring unit 13, where the lengths between mutually adjacent points (coordinate values) are calculated and added. After the points necessary for obtaining total wall length have been entered, "x", "2.4" and "=" are inputted, whereupon the total length of the wall is multiplied by the height thereof to obtain "52.2 m²" as the area of the wall. In other words, first the data ID is inputted, then coordinate values and numerical values, which are the computation data, are inputted after scale, units and computation have been designated, and finally "=" is inputted. In such case, the display 17 sequentially displays the data identification code and measured values in combination. However, if only "PRINT" has been designated, the printer output unit 18 will print out this information.

The present invention can be modified in various ways and is not limited to the above-described embodiment. For example, in the example shown in Fig. 3, the menu sheet is provided with alphabetic character keys. However, it is permissible to input the data ID solely in the form of numerical values and delete the alphabetic character keys. It is also permissible to input different key information based on inputs made by a combination of the alphabetic character keys. Further, it is possible to store the results of computations in advance for each ID and define and append key information such as will edit, tabulate and print out these results for each ID in response to a print designation. In this case, it is permissible to provide an edit output function in which, by forming the ID of a combination of alphanumeric characters, alphabetic characters are arranged vertically and numeric characters horizontally to produce an edited output in the form

| | 01 | 02 | 03 |
|---|---|---|---|
| A | .... | .... | .... |
| B | .... | .... | .... |
| C | .... | .... | .... |
| D | .... | .... | .... |

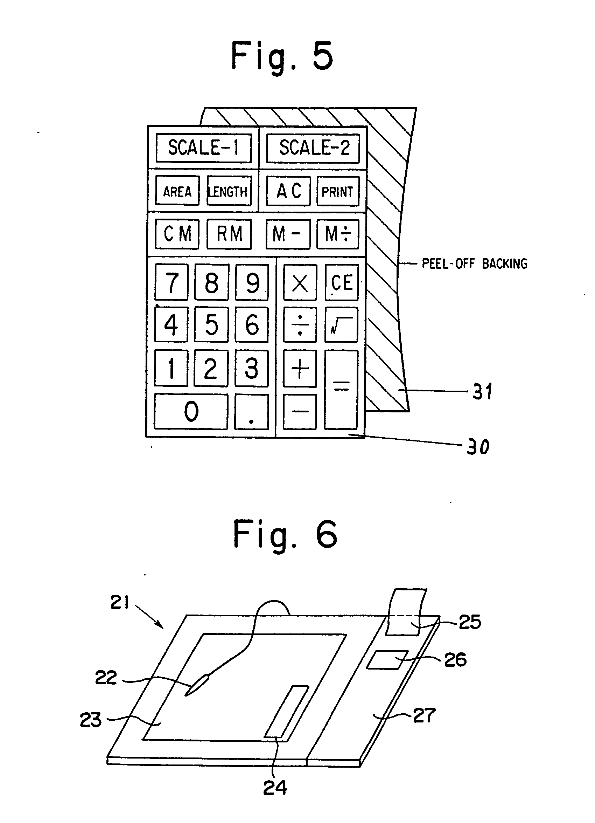

As shown in Fig. 5, the menu sheet (30) has its rear side coated with adhesive paste and is affixed to a specific region on the surface of the panel of the coordinate input means 1 shown in Fig. 1 after a sheet of backing paper (31) is peeled off. With such an arrangement, the menu sheet can be readily changed. This enables a menu sheet to be constituted by the minimum necessary key information for the particular objective and also makes it possible to simplifiy the program itself. In addition, the combination of the menu sheet and program can be changed as desired, thus making it possible to provide a unit capable of various types of processing.

Fig. 6 is a view illustrating another embodiment of a drawing measurement processing unit according to the present invention. In the Figure, numeral 21 denotes coordinate input means, 22 a stylus pen, 23 and 27 panels, 24 a menu sheet, 25 a printer and 26 a display.

In Fig. 6, the coordinate input means 21 comprises the stylus pen 22, panel 23 and the menu sheet 24, which is attached to the top of the panel 23, and is a so-called digitizer for inputting coordinate values on the panel 23 when the panel is hit with the stylus pen 22. Mounted within the panel 27 is the processing means for processing instructions and data inputted from the coordinate input means 21. Mounted on the panel 27 are the printer 25 and display 26 for outputting contents inputted from the coordinate input means 21 as well as the results of processing. As mentioned earlier, the menu sheet 24 has, by way of example, numeric keys of from "0" to "9", computation designating keys such as "x", "÷", "AC", "AREA" and "LENGTH", and scale designating keys such as "SCALE 1" and "SCALE 2". By hitting the menu sheet 24 with the stylus pen 22, the processing means reads in the corresponding key information. To this end, the processing means naturally has a function for identifying whether coordinate values inputted from the coordinate input means 21 represent key information from the menu sheet 24 or merely coordinate value data, as well as a function for identifying and processing key information. Accordingly, a program in the processing means for coordinate recognition and a program for the identification and processing of the key information are prepared in accordance with the contents of the menu sheet 24.

Fig. 7 is a view showing yet another embodiment of a drawing measurement processing unit according to the present invention. Here the menu sheet 24 shown in Fig. 6 is replaced by a keyboard 24' arranged on the panel 27 alongside the coordinate input means 21. The keyboard 24' in this case may have contents on the same level as that shown in Figs. 3 and 4 and can be a keyboard similar to that of a calculator. This enables the unit to be made compact in construction.

Industrial Applicability

As set forth above, the drawing measurement processing unit according to the present invention is suitable for calculating various shapes, cross sections, lengths, areas, volumes and the like expressed on a construction drawing, work drawing, measurement drawing and various other scale drawings (inclusive of full-size and enlarged drawings) placed on the unit.

Claims

1. A measurement processing unit which includes means (11) for inputting a computation command and coordinate values, processing means (13, 14, 15) for computing length, area and volume and the like from the inputted computation command and coordinate values, and output means (17, 18) for outputting the inputted data and the contents of computations, characterised in that the input means (1, 11; 22, 23, 24; 24'), the processing means (3; 12, 13, 14, 15, 16) and the output means (4, 5; 17, 18, 25, 26) are all mounted upon a single board (6), and the unit is useable for processing the measurements of a drawing placed on a panel of the input means and includes a menu sheet (2) affixed to a specified coordinate region on the panel and having keys for designating desired computations and scales.

2. A measurement processing unit according to Claim 1, wherein the processing means (3) is capable of reading and recognising desired information from the menu sheet (2) from the coordinate values.

3. A measurement processing unit according to Claim 2, wherein the processing means (3; 13, 14, 15) is capable of determining whether coordinate value input data from the input means (1; 21) is information input from computation designating keys (24) or is a coordinate value being subjected to computation and to perform predetermined processing designated by the inputted information.

4. A measurement processing unit according to any preceding claim, wherein the processing means (13, 14, 15) is capable of modifying information inputted (11) from the numeric keys of a menu sheet input means so that that information can perform to the menu sheet keys.

5. A measurement processing unit according to any preceding claim, wherein a menu sheet keyboard (24; 30) is fixed to the panel (23) of the input means (1) in a manner (31) to enable it to be readily changed in order to alter the desired processing steps.

6. A measurement processing unit according to any preceding claim, wherein the processing means (13, 14, 15) has an editing function and is adapted so as to control (16) the output means (17, 18) to output the data which has been edited by the editing function.

7. A measurement processing unit according to Claim 6, wherein the processing means (13, 14, 15) is capable of editing data for each and every data identification code (ID) which has been inputted.

8. A measurement processing unit according to any preceding claim, wherein the board (6) can be folded (7) in two parts, repectively containing (a) the coordinate input means (1) and a keyed menu sheet (2) and (b) the processing means, display means and output means (3, 4, 5).

## Patentansprüche

1. Messdatenrechner mit einer Einrichtung (11) zur Eingabe eines Rechenbefehls und der Koordinatenwerte, Recheneinrichtungen (13, 14, 15) zum Berechnen der Länge, der Fläche und des Volumens und dergleichen aus den eingegebenen Rechenbefehlen und Koordinatenwerten und Ausgabeeinrichtungen (17, 18) zur Ausgabe der eingegebenen Daten und des Recheninhalts, dadurch gekennzeichnet, daß die Eingabeeinrichtungen (1, 11; 22, 23, 24: 24'), die Recheneinheiten (3; 12, 13, 14, 15, 16) und die Ausgabeeinrichtungen (4, 5; 17, 18, 25, 26) sämtlich auf einer einzigen Platte (6) angeordnet sind und daß der Rechner zum Berechnen der Messdaten einer auf einem Träger der Eingabeeinrichtung angeordneten Zeichnung dient und eine Menueplatte (2) aufweist, die in einem speziellen Koordinatenbereich auf dem Träger angeordnet ist und Schlüssel zur Bezeichnung bestimmter Berechnungen und Maßstäbe aufweist.

2. Messdatenrechner nach Anspruch 1, dadurch gekennzeichnet, daß der Rechner (3) zum Einlesen und Erkennen gewünschter Informationen aus der Menueplatte (2) von den Koordinatenwerten dient.

3. Messdatenrechner nach Anspruch 2, dadurch gekennzeichnet, daß der Rechner (3; 13, 14, 15) zur Bestimmung dient, ob die Koordinatenwerte-Eingabedaten von der Eingabeeinrichtung (1; 21) eine Informationseingabe von dem Rechnerschlüssel (24) ist oder ein Koordinatenwert zur Berechnung und zur Bestimmung einer vorbestimmten und durch die eingegebene Information bezeichneten Berechnung.

4. Messdatenrechner nach einem der Ansprüche 1 bis 3, dadurch gekennzeichnet, daß die Recheneinrichtung (13, 14, 15) zur Modifizierung der Informationen von dem numerischen Schlüssel einer Menueplatteneingabe dient, so daß diese Information auf den Menueplattenschlüsseln durchführbar ist.

5. Messdatenrechner nach einem der Ansprüche 1 bis 4, dadurch gekennzeichnet, daß die Menueplattentastatur (24, 30) auf dem Träger (23) der Eingabeeinrichtung (1) so angeordnet ist, daß sie zur Änderung der gewünschten Verfahrensschritte leicht austauschbar ist.

6. Messdatenrechner nach einem der Ansprüche 1 bis 5, dadurch gekennzeichnet, daß die Recheneinrichtung (13, 14, 15) eine Ausgabefunktion aufweist und zur Steuerung der Ausgangseinrichtung (17, 18) für die Ausgabe der Daten dient, die durch die Ausgabefunktion aufbereitet worden sind.

7. Messdatenrechner nach Anspruch 6, dadurch gekennzeichnet, daß die Recheneinrichtung (13, 14, 15) zur Ausgabe einzelner Daten-Identifikationscodes (ID) dient, die eingegeben worden sind.

8. Messdatenrechner nach einem der Ansprüche 1 bis 7, dadurch gekennzeichnet, daß die Tafel (6) in zwei Teile faltbar ist und jeweils a) eine Koordinateneingangseinrichtung (1) und eine beschlüsselte Menuetafel (2) und b) die Rechnereinheit, die Displayeinheit und die Ausgabeeinrichtung (3, 4, 5) aufweist.

## Revendications

1. Unité de traitement de mesures qui comprend des moyens (11) pour entrer un ordre de calcul et des valeurs de coordonnées, des moyens de traitement (13; 14, 15) pour calculer des longueurs, des surfaces et des volumes, etc., à partir de l'ordre de calcul et des valeurs de coordonnées entrés, et des moyens de sortie (17, 18) pour sortir les données entrées et le contenu des calculs, caractérisée en ce que les moyens d'entrée (1, 11; 22, 23, 24; 24'), les moyens de traitement (3; 12, 13, 14, 15, 16) et les moyens de sortie (4, 5; 17, 18, 25, 26) sont tous montés sur un seul tableau (6) et en ce qu'on peut utiliser l'unité pour traiter les mesures d'un plan placé sur une console des moyens d'entrée et comporte une feuille de menu (2) fixée sur une région de coordonnées spécifiée sur la console et ayant des touches pour désigner des calculs et des échelles désirés.

2. Unité de traitement de mesures selon la revendication 1, dans laquelle les moyens de traitement (3) peuvent lire et reconnaître les informations désirées en provenance de la feuille de menu (2) pour les valeurs de coordonnées.

3. Unité de traitement de mesures selon la revendication 2, dans laquelle les moyens de traitement (3; 13, 14, 15) peuvent déterminer si les données entrées des valeurs de coordonnées en provenance des moyens d'entrée (1; 21) sont des informations entrées en provenance des touches de désignation de calculs (24) ou sont une valeur de coordonnée à soumettre à calcul et ils peuvent effectuer le traitement prédéterminé désigné par l'information entrée.

4. Unité de traitement de mesures selon l'une quelconque des revendications précédentes, dans laquelle les moyens de traitement (13, 14, 15) peuvent modifier les informations entrées (11) en provenance des touches numériques des moyens d'entrée de la feuille de menu de façon que cette information puisse provenir des touches de la feuille de menu.

5. Unité de traitement de mesures selon l'une des revendications précédentes, dans laquelle un clavier de feuille de menu (24; 30) est fixé sur la console (23) des moyens d'entrée (1) de manière (31) à lui permettre d'être aisément modifié de façon è modifier les stades de traitement désirés.

6. Unité de traitement de mesures selon l'une des revendications précédentes, dans laquelle les moyens de traitement (13, 14, 15) ont une fonction d'édition et sont adaptés pour commander (16) des moyens de sortie (17, 18) pour sortir les données qui ont été éditées par la fonction d'édition.

7. Unité de traitement de mesures selon la revendication 6, dans laquelle les moyens de traitement (13, 14, 15) peuvent éditer des données pour chaque code d'identification de données (code ID) et pour tous ces codes qui ont été entrés.

8. Unité de traitement de mesures selon l'une des revendications précédentes, dans laquelle le tableau (6) peut être plié (7) en deux parties, contenant respectivement (a) des moyens d'entrée des coordonnées (1) et une feuille de menu codée (2) et (b) des moyens de traitement, des moyens de visualisation et des moyens de sortie (3, 4, 5).

# Fig. 1

# Fig. 2

# Fig. 3

| | | | | A |
|---|---|---|---|---|
| | | | | B |
| | | | | S |
| SCALE 1 | SCALE 2 | READ FORMAT | UNITS | T |
| AREA | LENGTH | NUMBER | ANGLE | U |
| CM | RM | M − | M + | V |
| 7 | 8 | 9 | × | PRINT | W |
| 4 | 5 | 6 | ÷ | AC | X |
| 1 | 2 | 3 | + | CE | Y |
| 0 | | = | − | √ | Z |

# Fig. 4

A  0  1

SET FORMAT TO "POINT" AND SET UNITS TO "m"

SCALE 1  2  0  0  LENGTH  POINT 1, POINT 2 . . . . .  x  2 . 4

HEIGHT OF WALL

=

ANSWER    52.2 m²

# Fig. 5

| SCALE-1 | SCALE-2 |
| AREA | LENGTH | A C | PRINT |
| C M | RM | M − | M ÷ |

| 7 | 8 | 9 | × | CE |
| 4 | 5 | 6 | ÷ | √ |
| 1 | 2 | 3 | + | = |
| 0 | . | − | |

PEEL-OFF BACKING

31

30

# Fig. 6

21

22
23
24
25
26
27

# Fig.7

# Fig.8